# FASCICULE DE BREVET EUROPEEN

(11) **EP 4 401 996 B1**
(45) Date de publication et mention de la délivrance du brevet: **20.08.2025**
(21) Numéro de dépôt: 22789181.9
(22) Date de dépôt: 14.09.2022
(51) Int. Cl.: B60J 1/00, B60J 1/08, B61D 25/00

(54) **SYSTEME DE FIXATION D'UN VITRAGE LATERAL DE MOYEN DE TRANSPORT AVEC UN VERROU COMPRENANT AU MOINS UNE SAILLIES DE DETROMPAGE**
SYSTEM ZUR BEFESTIGUNG EINER SEITENVERGLASUNG EINES TRANSPORTMITTELS MIT EINEM SCHLOSS MIT MINDESTENS EINER VERWECHSLUNGSSICHERUNGSPROJEKTION
SYSTEM FOR FASTENING SIDE GLAZING OF A MEANS OF TRANSPORT WITH A LOCK COMPRISING AT LEAST ONE FOOLPROOFING PROJECTION

(30) Priorité: 17.09.2021 FR 2109782
(43) Date de publication de la demande: 24.07.2024
(73) Titulaire: Saint-Gobain Sekurit France, 60150 Thourotte (FR)
(72) Inventeur: GASTAL, Guillaume, 42530 DABROWA GORNICZA (PL); SILVESTRINI, Laurent, 92400 COURBEVOIE (FR); GRIGO, Uwe, 52134 HERZOGENRATH (DE)
(74) Mandataire: Saint-Gobain Recherche
(86) Numéro de dépôt international: PCT/EP2022/075478
(87) Numéro de publication internationale: WO 2023/041554

(56) Documents cités:
- WO-A1-2021/160962
- DE-A1- 4 009 348
- FR-A1- 2 282 526

## Description

### Domaine technique

L'invention concerne la fixation d'un vitrage latéral d'un moyen de transport, et en particulier d'un vitrage de train, à une baie périphérique, généralement métallique. La fixation du vitrage est réalisée au moyen d'un verrou présentant une aile latérale s'étendant à l'intérieur d'une cavité d'accrochage en vis-à-vis d'un bord d'une face intermédiaire de la vitre intérieure par rotation à 90° de ladite aile latérale. Ce type de vitrage est habituellement fixé à la baie du train en position verticale.

### Arrière-plan technologique

La demande internationale de brevet N° WO 2021/160962 expose un vitrage avec une telle fixation, accessible depuis l'extérieur du moyen de transport.

### Résumé de l'invention

### Problème technique

Le but de l'invention est de pallier l'inconvénient de l'art antérieur en proposant un système de fixation permettant plus aisément la vérification de la position du verrou.

### Solution au problème technique

Pour ce faire, l'invention se rapporte, dans son acceptation la plus large, à un système de fixation d'un vitrage latéral d'un moyen de transport, en particulier un vitrage de train, à une baie périphérique selon la revendication 1. Ledit vitrage est ainsi un vitrage multiple, fixe, présentant une face extérieure qui fait face à un espace extérieur et une face intérieure qui fait face à un espace intérieur, ladite face extérieure du vitrage étant en continuité d'aspect avec un flanc extérieur de ladite baie sur tout sa périphérie, ledit vitrage comprenant :

- une vitre extérieure présentant une face extérieure qui fait face à l'espace extérieur, un chant périphérique et une face intermédiaire à l'opposé de la face extérieure, ladite vitre extérieure étant de préférence feuilletée et comprenant alors au moins une feuille de verre extérieure, une feuille de verre intérieure, ainsi qu'une feuille de matière plastique située entre ladite feuille de verre extérieure et ladite feuille de verre intérieure, chaque feuille de ladite vitre extérieure présentant un chant périphérique,
- une vitre intérieure ayant une face intérieure qui fait face à l'espace intérieur, une face intermédiaire à l'opposé de la face intérieure, ainsi qu'un chant périphérique,
- une structure interne qui est située en périphérie interne de ladite vitre extérieure et en périphérie interne de ladite vitre intérieure en étant au moins en partie plus vers le centre du vitrage que le chant périphérique respectivement de ladite vitre extérieure et de ladite vitre intérieure, et qui tient ces deux vitres ensemble de telle sorte que le vitrage réalise une séparation entre ledit espace extérieur et ledit espace intérieur avec une cavité de vitrage située entre lesdites vitres, ladite structure interne comportant une cavité d'accrochage présentant un fond centripète et une ouverture centrifuge, ladite baie comportant un verrou qui est fixé à ladite baie et est situé plus centrifuge que le chant de ladite vitre intérieure, ledit verrou présentant une aile latérale s'étendant à l'intérieur de ladite cavité d'accrochage et en vis-à-vis d'un bord de ladite face intermédiaire de la vitre intérieure par rotation à 90° de ladite aile latérale, un joint d'étanchéité extérieur, de préférence creux, étant situé dans un espace d'applique entre d'une part ledit flanc extérieur et d'autre part le chant de ladite vitre extérieure ou d'autre part le chant de ladite feuille de verre extérieure, ledit joint d'étanchéité extérieur présentant une face intérieure.

Le système de fixation selon l'invention est remarquable en ce que ledit verrou comporte au moins une saillie, et comporte de préférence une première saillie et une seconde saillie, s'étendant vers l'espace extérieur, ledit joint d'étanchéité extérieur comprenant une rainure s'étendant de ladite face intérieure vers l'espace extérieur,
- ladite saillie, et de préférence lesdites saillies, étant destinée à être logée dans ladite rainure lorsque ladite aile est disposée dans ladite cavité d'accrochage, le verrou étant en position fermée, et
- ladite saillie, et de préférence lesdites saillies, étant destinée à être en appui sur ladite face intérieure dudit joint d'étanchéité extérieur lorsque le verrou est dans une autre position que la position fermée.

Le système de fixation selon la présente invention a pour avantage de faciliter la vérification de la position du verrou, sans aucun démontage, en particulier du joint d'étanchéité extérieur. Une personne située à l'extérieur du wagon, par exemple un contrôleur présent sur le quai de la gare ferroviaire où est situé le wagon, voyant un désaffleurement du joint d'étanchéité par rapport à la baie se rend compte immédiatement, même sans connaître le système de fixation de la présente invention, qu'il existe manifestement une anomalie en ce qui concerne le vitrage du wagon. En outre l'invention simplifie l'intervention technique à exécuter sur le vitrage car il n'est pas nécessaire de vérifier tous les verrous présents, mais uniquement celui pour lequel il a été identifié un désaffleurement du joint d'étanchéité extérieur.

Lorsqu'une seule saillie est utilisée, une position du verrou autre que la position fermée provoque une bosse localisée du joint d'étanchéité extérieur à l'endroit où la saillie appuie sur la face intérieure dudit joint d'étanchéité extérieur.

Lorsque deux saillies sont utilisées, toute position du verrou autre que la position fermée provoque une bosse conséquente à l'endroit où les deux saillies appuient sur la face intérieure dudit joint d'étanchéité extérieur.

La notion de continuité d'aspect au sens de la présente invention, signifie que visuellement, de l'espace extérieur, les deux surfaces paraissent dans la continuité l'une de l'autre. Dans la pratique, il est possible de mesurer une différence de hauteur allant jusqu'à 1 mm en raison des tolérances de fabrication. Bien que souhaitée, une valeur 0,0 mm pour 100 % des vitrages n'est pas atteignable en pratique ; l'homme du métier le sait bien.

De préférence, le joint d'étanchéité extérieur présente une épaisseur, ladite saillie, et de préférence lesdites saillies, présente(nt) une longueur inférieure à l'épaisseur dudit joint d'étanchéité extérieur.

En position fermée, ladite saillie, et de préférence chaque saillie, pénètre ainsi dans la rainure présente sur le joint d'étanchéité extérieur, sans buter sur le fond de la rainure de manière à ne pas le déplacer et provoquer un désaffleurement non souhaité pouvant induire en erreur une personne contrôlant le joint.

De préférence, ladite saillie, et de préférence encore lesdites saillies, présente(nt) une longueur égale à au moins 25% de l'épaisseur dudit joint d'étanchéité extérieur, voire à au moins 50% de l'épaisseur dudit joint d'étanchéité extérieur.

De préférence, ladite rainure est disposée au milieu dudit joint d'étanchéité extérieur selon sa hauteur.

Cette disposition de la rainure a pour avantage d'accueillir facilement les saillies présentes sur le verrou.

Avantageusement, une extrémité d'une ou de chaque saillie présente un arrondi.

Un arrondi en extrémité de saillie permet d'établir un contact avec la face intérieure du joint d'étanchéité extérieur tout en ne le détériorant pas. En effet, le joint d'étanchéité est fait d'une matière plastique pouvant se dégrader aisément par le contact d'une forme saillante.

De préférence, ladite aile latérale présente une extrémité en pointe présentant dans une vue de face un angle compris entre 60° et 120°, de préférence entre 80° et 100°, de manière encore plus préférentielle entre 85° et 95°.

De préférence, ladite rainure présente une largeur, une ou chaque saillie présente une épaisseur comprise entre 0,8 et 1,1 fois ladite largeur de la rainure.

Les saillies peuvent ainsi pénétrer facilement dans la rainure du joint d'étanchéité extérieur.

On décrira ci-après, à titre d'exemples non limitatifs, plusieurs formes d'exécution de la présente invention, en référence aux figures annexées sur lesquelles :
- [Fig.1] illustre un schéma en perspective de l'extérieur d'une baie de carrosserie de train comportant un vitrage multiple fixé à la baie grâce à un système de fixation selon l'invention, le système étant illustré sans joint d'étanchéité extérieur ;
- [Fig.2] illustre un schéma en coupe transversale verticale en bas du vitrage selon la [Fig.1], la baie n'étant pas représentée ;
- [Fig.3] illustre un schéma en coupe transversale verticale en bas du vitrage, selon les figures 1 et 2, fixé à une baie au moyen d'un verrou selon un mode de réalisation préféré de l'invention, le verrou étant en position fermée et vu en coupe complète ;
- [Fig.4] représente schématiquement le système de fixation du vitrage illustré sur la [Fig.3] hormis que le verrou est en position ouverte ;
- [Fig.5] illustre schématiquement le verrou selon l'invention en vue de côté ;
- [Fig.6] illustre schématiquement le verrou selon l'invention en vue de dessus ;
- [Fig.7] illustre schématiquement le verrou selon l'invention en vue de face.

Dans ces schémas, les proportions entre les dimensions des différents éléments sont respectées afin de faciliter leur lecture.

Dans les modes de réalisation de l'invention, il est décrit la mise en œuvre de vitres ou de feuilles de verre. Chaque vitre peut être monolithique, c'est-à-dire constituée d'une feuille de matière unique, ou être composite, c'est-à-dire constituée de plusieurs feuilles de matière entre lesquelles est insérée au moins une couche intermédiaire de matière adhérente, dans le cas de vitrages feuilletés. La (ou les) feuille(s) de matière peut (ou peuvent) être minérale(s), notamment en verre, ayant par exemple subi un recuit ou une trempe, ou organique(s), notamment en matière plastique telle que le polyvinylbutyral. La couche intermédiaire contient de préférence au moins une matière plastique thermoplastique, de préférence du polyvinylbutyral (PVB), de l'éthylènevinylacétate (EVA), et/ou du polyéthylène téréphtalate (PET). Toutefois, la couche intermédiaire thermoplastique peut également contenir, par exemple, du polyuréthane (PU), du polypropylène (PP), du polyacrylate, du polyéthylène (PE), du polycarbonate (PC), du polyméthacrylate de méthyle, du chlorure de polyvinyle, de la résine de polyacétate, des résines de coulée, des acrylates, de l'éthylène-propylène fluoré, du fluorure de polyvinyle et/ou de l'éthylène-tétrafluoroéthylène, ou des copolymères ou des mélanges de ceux-ci. La couche intermédiaire thermoplastique peut être formée d'un ou de plusieurs films thermoplastiques superposés, l'épaisseur d'un film thermoplastique ne dépassant pas, de préférence, 1 mm, notamment de 0,25 mm ou 0,5 mm à 1 mm ou 0,9 mm, typiquement autour de 0,4 mm ou 0,7 mm.

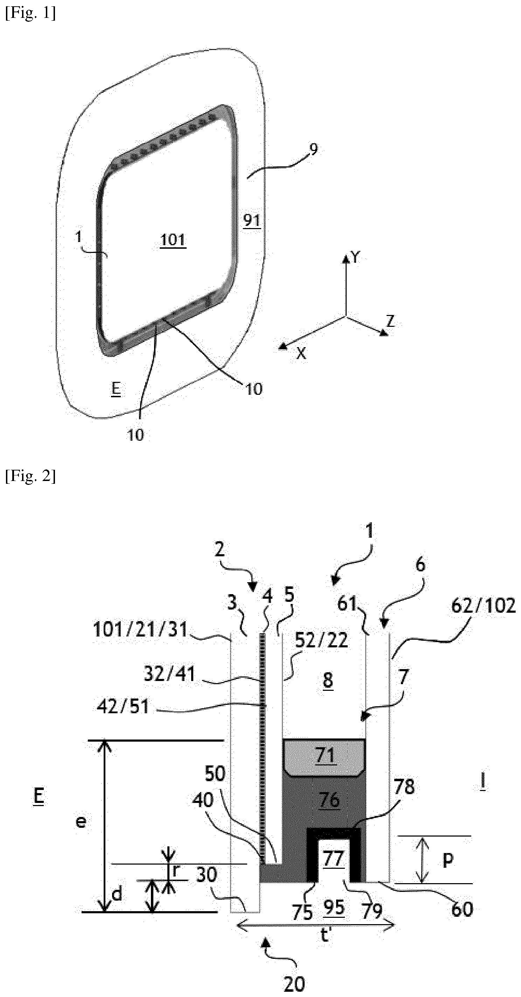

La [Fig.1] illustre un vitrage 1 latéral gauche selon l'invention d'un moyen de transport, ce vitrage étant positionné verticalement et fixé à une baie 9 de carrosserie de ce moyen de transport.

Il s'agit en particulier d'un vitrage latéral de train.

Ce vitrage réalise ainsi une séparation verticale entre un espace intérieure I qui est à l'intérieur du train et un espace extérieur E qui est à l'extérieur du train. La [Fig.1] est une vue schématique de l'extérieur.

Les notions de « extérieur » et « intérieur » sont donc considérées dans le présent document respectivement par rapport à cet espace extérieur E (ou orienté vers cet espace extérieur) et cet espace intérieur I (ou orienté vers cet espace intérieur).

Comme il s'agit d'un vitrage latéral, celui-ci s'étend pour l'essentiel selon l'axe généralement appelé « l'axe X » du moyen de transport, qui est l'axe longitudinal central d'avancé du moyen de transport équipé du vitrage selon l'invention en tant que vitrage latéral (ici du côté gauche) et qui correspond à l'axe X en [Fig.1]. L'axe Y est l'axe vertical et l'axe Z est l'axe transversal.

Dans le cadre du présent document, la notion de « centripète » et celle de « centrifuge » est à considérer dans le plan de la feuille en [Fig.1], ou dans un plan général du vitrage lorsqu'il est considéré à plat, exprimé par rapport au centre du vitrage, selon les axes X et Y ; le sens centripète est en direction de ce centre alors que le sens centrifuge s'éloigne de ce centre.

En référence à la [Fig.2], il est représenté schématiquement le vitrage 1 illustré sur la [Fig.1], vue en coupe partielle, dans une partie basse. La baie 9 n'est pas représentée. Le vitrage 1 est fixe. Il est d'un seul tenant, sans fenêtre ouvrable à l'intérieur comme cela est connu par exemple de la demande internationale de brevet N° WO 2016/042270 ; pour autant, bien que cela ne soit pas décrit en détail ici, l'invention pourrait s'appliquer à un tel vitrage à fenêtre ouvrable.

Ce vitrage 1 présente une face extérieure 101 qui fait face à l'espace extérieur E et une face intérieure 102 qui fait face à l'espace intérieur I.

Ce vitrage 1 comprend :
- une vitre extérieure 2 présentant une face extérieure 21 qui fait face à l'espace extérieur E, une face intermédiaire 22 à l'opposé de la face extérieure, ainsi qu'un chant périphérique 20,
- une vitre intérieure 6 présentant une face intérieure 62 qui fait face à l'espace intérieur I, une face intermédiaire 61 à l'opposé de la face intérieure, ainsi qu'un chant périphérique 60, et
- une structure interne 7 et qui tient ces deux vitres ensemble de telle sorte que le vitrage réalise la séparation entre l'espace extérieur et l'espace intérieur en réalisant une cavité de vitrage 8 qui est située entre les vitres 2, 6.

La structure interne 7 est qualifiée « interne » car elle est située en périphérie interne de la vitre extérieure 2 et en périphérie interne de la vitre intérieure 6 en étant au moins en partie (et de préférence en totalité) plus vers le centre (plus centripète) que le chant périphérique 20, 60 respectivement de la vitre extérieure 2 et de la vitre intérieure 6 ; c'est-à-dire que la structure interne 7 ne dépasse pas en direction centrifuge au-delà des chants périphériques 20, 60.

Les feuilles 3, 4, 5 et les vitres 2, 6 du vitrage 1 sont chacune d'un seul tenant.

La vitre intérieure 6 est une feuille de verre monolithique présentant une épaisseur comprise entre 3,0 et 8,0 mm, par exemple de 5,0 mm.

La vitre extérieure 2 est de préférence feuilletée et comprend alors, en partant de l'espace extérieur E : au moins une feuille de verre extérieure 3, une feuille de verre intérieure 5, ainsi qu'une feuille de matière plastique 4 située entre la feuille de verre extérieure 3 et la feuille de verre intérieure 5, chaque feuille 3, 4, 5 de la vitre extérieure 2 présentant un chant 30, 40, 50 périphérique.

La feuille de verre extérieure 3 présente une face extérieure 31 qui est orientée vers l'espace extérieur E, une face intercalaire 32 qui est orientée vers la feuille de matière plastique 4, intercalaire, avec le chant 30 périphérique situé entre ces deux faces.

La feuille de verre intérieure 5 présente une face intercalaire 51 qui est orientée vers la feuille de matière plastique 4, une face intérieure 52 qui est orientée vers la cavité de vitrage 8, avec le chant 50 périphérique situé entre ces deux faces.

La feuille de matière plastique 4 présente une face intercalaire extérieure 41 qui est orientée vers la face intercalaire 32 et qui est ici au contact de cette face intercalaire 32, une face intercalaire intérieure 42 qui est orientée vers la face intercalaire 51 et qui est ici au contact de cette face intercalaire 51, avec le chant 40 périphérique qui est situé entre ces deux faces intercalaires 41, 42.

La feuille de verre extérieure 3 est par exemple une feuille de verre présentant une épaisseur comprise entre 0,5 et 8,0 mm, par exemple de 6,0 mm.

La feuille de matière plastique 4 intercalaire est par exemple une feuille en polyvinylbutyral (PVB) présentant une épaisseur comprise entre 0,50 et 1,50 mm, par exemple de 0,76 mm. Cette feuille de matière plastique 4 présente de préférence les mêmes dimensions de longueur et de hauteur que la feuille de verre intérieure 5.

La feuille de verre intérieure 5 est une feuille de verre présentant une épaisseur comprise entre 0,5 et 8,0 mm, par exemple de 5,0 mm.

Ici, le vitrage 1 présente ainsi une épaisseur totale t' de 26,76 mm.

Le vitrage 1 est un vitrage fixe dans le sens où la structure interne 7 est destinée en outre à permettre de fixer le vitrage 1 à une baie 9 du moyen de transport (ici le train), sans possibilité de bouger par rapport à la baie 9.

Le vitrage 1 est un vitrage multiple dans le sens où il comporte plusieurs vitres 2, 6 ainsi que la cavité de vitrage 8 qui est située entre les deux vitres 2, 6, cette cavité étant remplie d'air ou de gaz, de préférence neutre comme l'argon ou le krypton ; cette cavité participe à l'isolation thermique conférée par le vitrage 1.

La structure interne 7 permet ainsi de maintenir les deux vitres 2, 6 à distance l'une de l'autre, avec une distance constante entre les deux vitres 2, 6, ici de 10,0 mm.

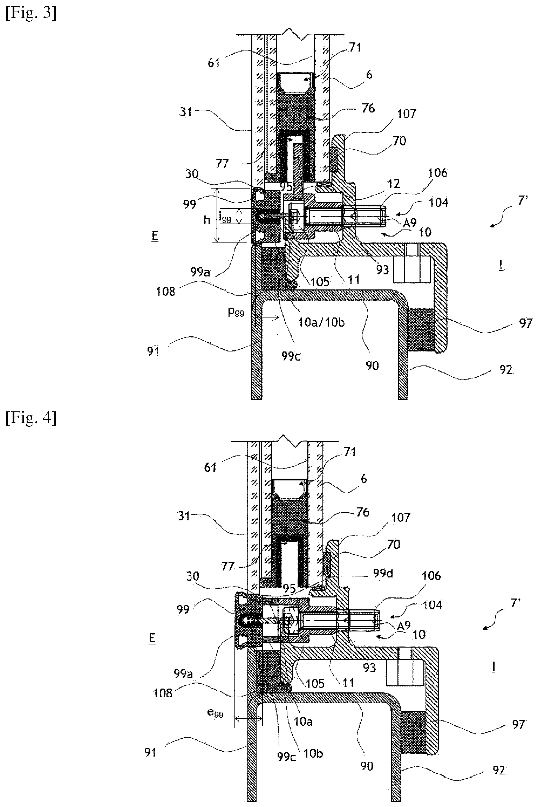

En référence maintenant à la [Fig.3], la baie 9 comporte un flanc extérieur 91, orientée verticalement et tournée vers l'espace extérieur, un flanc intérieur 92, orientée verticalement et tournée vers l'espace intérieur, ces deux flancs étant reliés par une traverse 90, horizontale le long des bords horizontaux du vitrage et verticale le long des bords verticaux du vitrage. Bien que cela ne soit pas illustré, cette traverse peut aussi être oblique ou en croix. Cette liaison forme un espace d'applique 95, dans lequel le vitrage est positionné puis fixé lors de son installation dans la baie qu'il doit fermer.

La baie 9 est ainsi périphérique : elle fait tout le tour du vitrage 1.

La baie 9 comporte un verrou 10 qui est fixé, ou attaché, à la baie et est situé plus centrifuge que le chant 60 de la vitre intérieure 6. Ce verrou 10 présente une aile 12 latérale s'étendant à l'intérieur de la cavité d'accrochage 77 et en vis-à-vis d'un bord de la face intermédiaire 61 de la vitre intérieure 6 par rotation à 90° de l'aile 12 latérale afin de retenir le vitrage. Ce verrou, ou chaque verrou, permet à la fois de fixer le vitrage et à la fois de retirer ce vitrage lorsqu'il est nécessaire de le changer pour le remplacer par un autre vitrage, tout en conservant le(s) verrou(s) fixé(s) directement ou indirectement à la baie.

Comme visible plus particulièrement sur la [Fig.2], la structure interne 7 comporte des moyens pour créer et maintenir l'existence de la cavité de vitrage 8 et maintenir le vitrage à la baie et la structure interne 7 comprend :
- un espaceur 71, interne qui est situé entre la feuille de verre intérieure 5 et la vitre intérieure 6,
- un cordon de mastic 76, interne, situé entre la feuille de verre intérieure 5 et la vitre intérieure 6 plus en périphérique (plus centrifuge) que l'espaceur 71,
- un rail 75, interne, allongé, en forme de U, s'étendant entre le bord de la face intermédiaire 22 et le bord de la face intermédiaire 61 et présentant ainsi un fond orienté vers la cavité de vitrage 8 et une ouverture orientée en direction opposée, afin de former la cavité d'accrochage 77, et
- éventuellement un cordon de colle, interne, pour coller le rail 75 d'une part en face intermédiaire 22 de la vitre extérieure 2 et d'autre part à la face intermédiaire 61 de la vitre intérieure 6.

De préférence, le rail 75, et ainsi la cavité d'accrochage 77, n'est pas en contact direct avec le bord de la face intermédiaire 22 et le bord de la face 61. Le rail 75 est, de préférence, noyé dans le cordon de colle. Le rail 75 peut être en métal ou en alliage métallique.

Bien que cela ne soit pas illustré, à la place d'un rail allongé et présent tout le long de chaque bord du vitrage, il est possible de prévoir que ladite cavité d'accrochage soit formée par une rainure localisée à l'endroit de chaque verrou ; ainsi, entre deux rainures localisées, le cordon de mastic 76 remplit la totalité de l'espace entre d'une part l'espaceur 71 et d'autre part l'arête entre le chant 20, 60 et respectivement la face intermédiaire 22, 61.

L'espaceur 71 est situé en retrait des chants 50, 60 de la feuille de verre intérieure 5 et de la vitre intérieure 6, vers le centre du vitrage, tout en étant écarté, lorsque le vitrage est vu en coupe transversale, d'un écart e plus en périphérie que la continuité transversale du chant 60 de la vitre intérieure 6. Cet écart e est, de préférence, compris entre 10,0 et 50,0 mm, et de préférence encore entre 10,0 et 40,0 mm, voire entre 20,0 et 30,0 mm ; il est ici de 24,0 mm ; ce qui confère un clair de vitrage satisfaisant.

L'espaceur 71 peut être par exemple en matière plastique et/ou en métal et/ou en alliage métallique ; il permet de maintenir les deux vitres 2, 6 à une distance constante l'une de l'autre et de maintenir la cavité de vitrage 8.

L'espaceur 71 est maintenu en position contre la face intermédiaire 61 de la vitre intérieure 6 et contre la face intérieure 52 de ladite vitre intérieure 5 grâce au cordon de mastic 76.

Le vitrage 1 ne comprend pas de cadre, et notamment pas de cadre rigide métallique, qui maintiendrait les vitres 2, 6 respectivement à la fois par la face extérieure 21 et par la face intérieure 62.

Le flanc intérieur 92 n'est de préférence pas directement en contact avec le bord de la face intérieure 62 de la vitre intérieure 6 grâce à la présence d'un cordon de joint d'étanchéité intérieur 70 ; le cordon de joint d'étanchéité intérieur 70 est de préférence d'un seul tenant et, de préférence encore, n'est pas en contact avec le chant 60 de la vitre interne 6. Il est de préférence préfabriqué puis collé contre le bord de la face intérieure 62.

Le cordon de mastic 76, à lui tout seul ou avec le cordon de colle, remplit de préférence tout le reste de l'espace à l'exception de l'espace réalisé par la cavité d'accrochage 77, et cela en direction transversale entre la face intermédiaire 61 de la vitre intérieure 6 et la face intermédiaire 22 de la vitre extérieure 2 et de préférence tout l'espace en hauteur entre d'une part l'espaceur 71 et d'autre part l'arête entre le chant 60 et la face intermédiaire 61.

Ledit cordon de colle peut comprendre ou être un cordon de colle à base de polyuréthane ou de silicone ou de MS polymère (c'est-à-dire de polyéther modifié silane) ou de polysulfide, afin que la liaison chimique avec au moins la vitre intérieure soit forte et de préférence que la liaison chimique avec les deux vitres de part et d'autre de la cavité de vitrage soit forte.

Le cordon de colle peut comprendre un profilé métallique qui est collé latéralement de chaque côté de la cavité de vitrage, avec un tel cordon de colle ou être en partie ou complètement intégré dans un tel cordon de colle.

Le cordon de colle pourrait comprendre un câble, et notamment un câble métallique, qui est collé latéralement sur un côté au moins de la cavité de vitrage, afin de permettre de faciliter la rupture de la vitre par traction sur ce câble.

Le flanc extérieur 91 est, de préférence, situé dans la continuité d'aspect (c'est-à-dire ici à l'aplomb) de la face extérieure 31 de la feuille de verre extérieure 3, c'est-à-dire dans la continuité d'aspect de la face extérieure 21 de la vitre extérieure 2, qui est aussi la face extérieure 101 du vitrage 1.

Un joint d'étanchéité extérieur 99, de préférence creux, est situé dans un espace d'applique 95 entre, avec de préférence un contact,
- d'une part le bord du flanc extérieur 91 et la traverse 90
- et d'autre part le chant 20 de la vitre extérieure 2 (cas de la vitre extérieure monolithique) ou d'autre part, comme ici illustré sur la [Fig.2], le chant 30 de la feuille de verre extérieure 3
- tout en étant de préférence au contact d'un bord de la face intermédiaire 22 de la vitre extérieure 2 (cas de la vitre extérieure monolithique) ou au contact, comme ici, d'un bord d'une face intermédiaire 32 de la feuille de verre extérieure 3.

Le joint d'étanchéité extérieur 99 présente de préférence une hauteur h comprise entre 5,0 et 30,0 mm, de préférence entre 8,0 et 20,0 mm, par exemple de 18,0 mm.

Il a été vérifié qu'une isolation thermique adéquate est obtenue sur la base de l'exemple de la [Fig.1], lorsque ladite cavité de vitrage 8 est d'un seul tenant, qu'elle est remplie d'argon et présente une épaisseur uniforme. La distance entre la face extérieure 101 et la face intérieure 102 est ainsi constante et est ici de 26,76 mm.

La fixation comporte de préférence plusieurs ailes 12 latérales qui s'étendent toutes en direction centripète, c'est-à-dire vers un axe central vertical du vitrage pour les ailes latérales s'étendant horizontalement lorsque leurs verrous sont fermés et vers un axe central horizontal du vitrage pour les ailes latérales s'étendant verticalement lorsque leurs verrous sont fermés.

Il a été vérifié qu'une tenue mécanique appropriée est obtenue sur la base de l'exemple de la [Fig.1] lorsque le vitrage 1 est soumis à des conditions similaires à celles qu'il subirait s'il était intégré dans un train roulant à 160 km/h.

La structure de cadre de vitrage est sans partie de structure externe ; elle comporte uniquement une partie de structure interne 7 et qui est située en périphérie interne de la vitre extérieure 2 et en périphérie interne de la vitre intérieure 6 en étant plus vers le centre (plus centripète) que le chant périphérique 20, 60 respectivement de la vitre extérieure 2 et de la vitre intérieure 6, et qui tient ces deux vitres ensemble de telle sorte que le vitrage réalise une séparation entre l'espace extérieur E et l'espace intérieur I avec une cavité de vitrage 8 située entre les vitres 2, 6.

L'aile 12 latérale du verrou 10 pénètre dans la cavité d'accrochage 77 par rotation simple et directe du verrou à 90° sur lui-même.

Lorsque le vitrage est fixé à la baie, le flanc intérieur 92 s'étend en direction centripète, plus centripète que le chant 60 de la vitre intérieure 6 et elle présente un trou de fixation 93 qui est situé plus centrifuge que le chant 60 de la vitre intérieure 6 ; ce trou de fixation 93 présente un axe A9 parallèle au chant 60 de ladite vitre intérieure 6 ; c'est-à-dire horizontal.

Le verrou 10 est fixé directement au flanc intérieur 92 par un moyen de fixation 104, comme par exemple une vis présentant une tête 105, et de l'autre côté du flanc intérieur 92 par un écrou 106. La vis passe par le trou de fixation 93 et la tête 105 se trouve ainsi dans l'espace d'applique 95. Le verrou 10 présente un corps 11, cylindrique, creux, orienté horizontalement à l'intérieur duquel passe librement le moyen de fixation 104 et une aile 12 latérale (et de préférence comporte une seule aile latérale) s'étendant à partir du corps 11 en direction du centre du vitrage à l'état fixé, à l'intérieur de la cavité d'accrochage 77 et en vis-à-vis d'un bord de la face intermédiaire 61 de la vitre intérieure 6.

Le joint d'étanchéité extérieur 99 ne remplit, de préférence, pas tout l'espace entre le flanc extérieur 91 et le chant 20 de la vitre extérieure 2 afin qu'il soit facile à retirer pour accéder à la tête de vis 105 du verrou 10.

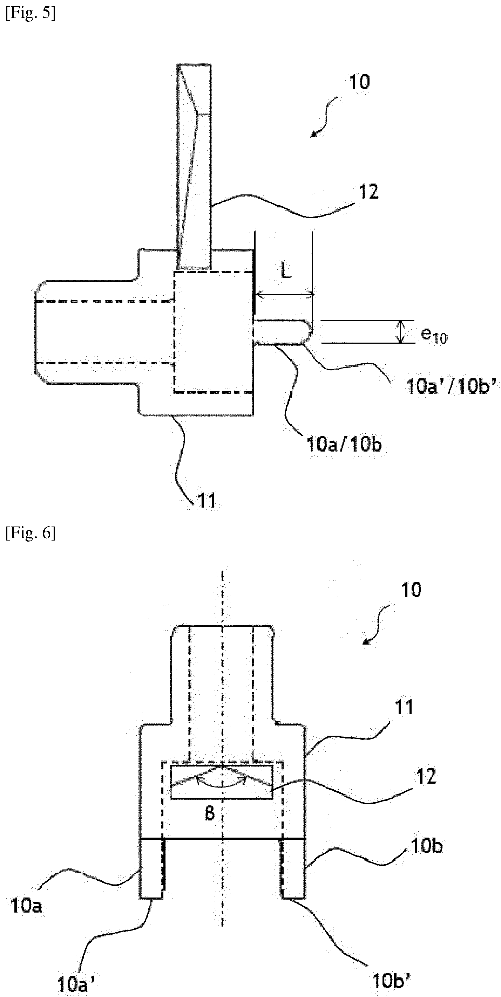

Il est représenté sur la [Fig.3] un mode de réalisation préféré de la présente invention. Le verrou 10 est représenté en position fermée, l'aile latérale 12 étant par conséquent disposée dans la cavité d'accrochage 77. Le joint d'étanchéité extérieur 99 présente une face extérieure 99a orientée vers l'espace extérieur E, une face intérieure 99d orientée vers l'espace intérieur I et une épaisseur e₉₉. En position fermée, la face extérieure 99a du joint d'étanchéité extérieur 99 est affleurante avec la face extérieure 31 de la feuille de verre extérieure 3 et ne s'étend pas plus à l'extérieur que cette face extérieure 31. Bien qu'il soit souhaité un affleurement de la face extérieure 99a du joint d'étanchéité extérieur 99 et de la face extérieure 31 de la feuille de verre extérieure 3, il peut néanmoins exister un écart compris entre 0,5 mm et 1 mm entre ces deux faces. Le joint d'étanchéité extérieur 99 fait de préférence tout le tour de vitrage en étant d'un seul tenant. Le verrou 10 comprend une première saillie 10a et une seconde saillie 10b, visibles également sur les figures 5 à 7, disposées, de préférence, sur la périphérie 10c du verrou 10. Le joint d'étanchéité extérieur 99 comporte une rainure 99c présente, de préférence, sur tout son pourtour. Alternativement, la rainure 99c est présente de manière discontinue sur le pourtour du joint d'étanchéité extérieur 99, en vis-à-vis de chaque verrou 10. La rainure 99c s'étend horizontalement le long des bords horizontaux du vitrage et verticalement le long des bords verticaux du vitrage.

La rainure 99c s'étend, dans une vue en coupe transversale de ladite face intérieure 99d vers l'espace extérieur E et présente une profondeur p₉₉ et une largeur l₉₉. La profondeur p₉₉ de la rainure 99c est comprise entre 50% et 90% de l'épaisseur e₉₉ du joint d'étanchéité extérieur 99. Les première et seconde saillies 10a, 10b présentent une longueur L (visible sur la [Fig.5]) inférieure à l'épaisseur e₉₉ du joint d'étanchéité extérieur 99. De préférence, la longueur L est égale à au moins 25% de l'épaisseur e₉₉, voire à au moins 50% de l'épaisseur e99. Les première et seconde saillies 10a, 10b présentent en outre une épaisseur e₁₀ comprise entre 0,8 et 1,1 fois la largeur l₉₉.

En position « verrou fermé », les première et seconde saillies 10a, 10b sont localisées dans la rainure 99c. En effet, lors de la rotation de 90° du verrou 10 sur lui-même, les première et seconde saillies 10a, 10b pénètrent dans la rainure 99c. Ainsi, lorsque le verrou 10 est en position fermée, le joint d'étanchéité extérieur 99 est affleurant, à un écart près mentionné précédemment, par rapport à la face extérieure 21 de la vitre extérieure 2 (face extérieure 31 de la feuille de verre extérieure 3). La présente invention permet par conséquent de contrôler visuellement, de l'extérieur, la position du verrou 10.

Par opposition à la configuration en position fermée visible sur la [Fig.3], la configuration du système de fixation du vitrage 1 en position ouverte est visible sur la [Fig.4]. Lorsque le verrou 10 est en position ouverte, l'aile 12 latérale est par conséquent positionnée à 90° par rapport à sa position lorsque le verrou 10 est en position fermée. La première saillie 10a présente à son extrémité 10a' une surface de contact et la seconde saillie 10b présente, quant à elle, à son extrémité 10b' également une surface de contact. De préférence, les extrémités 10a', 10b' présentent un arrondi. Alternativement, les extrémités 10a', 10b' présentent un plat. En position ouverte, les extrémités 10a', 10b' sont en contact avec la face intérieure 99d du joint d'étanchéité extérieur 99. Les première et seconde saillies 10a, 10b appuient ainsi sur le joint d'étanchéité extérieur 99 de façon à ce que sa face extérieure 99a désaffleure, en direction de l'espace extérieur E, par rapport à la face extérieure 21 de la vitre extérieure 2 (face extérieure 31 de la feuille de verre extérieure 3).

La présente invention a ainsi pour avantage de permettre de vérifier simplement la position du verrou 10 de l'espace extérieur E. Par exemple, un contrôleur, présent sur le quai à côté duquel le wagon est positionné, peut identifier visuellement que le joint d'étanchéité extérieur 99 dépasse par rapport à la face extérieure 21 de la vitre extérieure 2 (face extérieure 31 de la feuille de verre extérieure 3). Il peut, par exemple, signaler ce problème à une équipe en charge de la maintenance du wagon afin qu'elle intervienne pour effectuer une vérification de la position du verrou 10 et, éventuellement, le déplacer en position fermée si nécessaire.

En position ouverte, l'écart entre la face extérieure 99a du joint d'étanchéité extérieur 99 et la face extérieure 31 de la feuille de verre extérieure 3 est compris entre 25% et 50% de l'épaisseur du joint d'étanchéité extérieur 99. Cet écart est égal à, environ, la longueur des première et seconde saillies 10a, 10b. Dans la présente invention, on souhaite que le joint d'étanchéité extérieur 99 désaffleure suffisamment par rapport à la face extérieure 31 de la feuille de verre extérieure 3 de façon à ce que ce désaffleurement soit suffisamment visible et ainsi détecter un problème relatif à la position du verrou 10. En d'autres termes, la présente invention est un dispositif de détrompage. En effet, il se peut que lors du montage du vitrage 1, un, voire plusieurs, verrou 10 n'ait pas été verrouillé par inadvertance. Grâce à l'invention, on peut se rendre compte aisément de cet oubli.

La structure de cadre de vitrage comporte en outre une structure externe 7' qui s'étend en périphérie externe de la vitre extérieure 2 et/ou en périphérie externe de la vitre intérieure 6 en étant plus loin (plus centrifuge) que le chant périphérique 20, 60 respectivement de la vitre extérieure 2 et/ou de la vitre intérieure 6 en partant du centre de la vitre.

Ici, la structure externe 7' présente en coupe transversale sensiblement la forme d'un h, avec un corps 107 et deux pieds qui s'étendent plus centrifuge à partir du corps, le pied extérieur étant plus court que le pied intérieur.

La structure externe 7' est par ailleurs fixée au flanc intérieur 92 par collage à l'aide d'un ruban de colle 97, éventuellement complété d'un joint ou d'un ruban de colle 108 situé entre le pied extérieur de la structure externe 7' et le flanc extérieur 91.

La structure externe 7', visible en figures 4 et 5, est une structure externe légère dans le sens où elle s'étend de préférence uniquement en périphérie externe de la vitre intérieure 6 en étant plus loin que le chant périphérique 60 de la vitre intérieure en partant du centre de la vitre (plus centrifuge) ; elle est aussi en périphérie externe de la cavité de vitrage 8 en étant plus loin que cette cavité de vitrage en partant du centre de la vitre (plus centrifuge), mais elle ne s'étend pas en périphérie externe de la vitre extérieure 2 en étant plus loin que le chant périphérique 20 de la vitre extérieure en partant du centre de la vitre.

En outre, la structure externe 7' est une structure externe légère dans le sens où, de préférence, elle ne s'étend pas plus vers le centre de la vitre interne 6 (plus centripète) que l'espaceur 71 afin que le clair de vitrage soit le plus grand possible.

Le corps 107 n'est de préférence pas directement en contact avec le bord de la face intérieure 62 de la vitre intérieure 6 grâce à la présence d'un cordon de joint d'étanchéité intérieur 70 ; le cordon de joint d'étanchéité intérieur 70 est de préférence d'un seul tenant et, de préférence encore, n'est pas en contact avec le chant 60 de la vitre interne 6.

Bien que cela ne soit pas illustré, la vitre extérieure 2 pourrait être aussi grande que la vitre intérieure 6, à la fois en longueur, selon l'axe X et en hauteur selon l'axe Y.

Bien que cela ne soit pas illustré, le chant 20 de la vitre extérieure 2 ou le chant 50 de la feuille de verre intérieure 5 peut comporter une lèvre centrifuge en matière plastique qui s'étend, dans l'espace d'applique 95, en direction de la traverse 90.

L'état fixé du vitrage est atteint par la rotation à 90° du verrou 10 sur lui-même, autour de l'axe du trou de fixation 93.

Pour une fixation correcte du vitrage, il est préférable d'utiliser plusieurs verrous et notamment plusieurs verrous le long de chaque bord du vitrage. L'intervalle entre deux verrous adjacents est de préférence compris entre 100,0 et 400,0 mm, de préférence encore entre 200,0 et 300,0 mm.

La vitre extérieure 2 est plus grande que la vitre intérieure 6, à la fois en longueur, selon l'axe X et en hauteur selon l'axe Y afin de permettre de cacher une partie du verrou 10 derrière un bord périphérique de la vitre extérieure 2. Plus précisément ici, la feuille de verre extérieure 3 est plus grande que la vitre intérieure 6, à la fois en longueur, selon l'axe X et en hauteur selon l'axe Y. Cela permet de cacher une partie du verrou 10 derrière un bord périphérique de cette feuille de verre extérieure.

Ainsi, le chant 30 de ladite feuille de verre extérieure 3 est situé en débord d, centrifuge, du chant 60 de la vitre intérieure 6 le long d'une partie au moins de la longueur du chant 30 de ladite feuille de verre extérieure 3 et de préférence le long de la totalité de la longueur du chant 30 (c'est-à-dire le long de la totalité de la périphérie du chant 30) de la feuille de verre extérieure 3 ; si la vitre extérieure 2 était monolithique (et non feuilletée), ce pourrait être le chant 20 de la vitre extérieure qui serait situé en débord.

Ainsi, lorsque la vitre extérieure 2 est observée de face, le débord d est de préférence présent tout autour de la vitre extérieure 2 : le chant 30 de la feuille de verre extérieure 3 s'étend plus loin, en direction opposée au centre de la vitre extérieure 2, que le chant 60 de la vitre intérieure 6. Ce débord d est de préférence constant le long d'un bord longitudinal ou latéral considéré ; il est de préférence identique le long de chacun des bords longitudinaux et latéraux de la vitre extérieure 2.

Le débord d est de préférence compris 5,0 et 30,0 mm, et de préférence entre 8,0 et 20,0 mm ; il est ici de 13,0 mm.

Ce débord d peut être caché de la vue de l'espace extérieur E par une couche d'émail située en pourtour de la face extérieure 21 de la vitre extérieure (ou en pourtour de la face extérieure 31 de la feuille de verre extérieure, respectivement lorsque la vitre extérieure est feuilletée).

En outre et indépendamment du débord d ci-avant, la feuille de verre intérieure 5 est plus petite que la vitre intérieure 6, à la fois en longueur, selon l'axe X et en hauteur selon l'axe Y.

Lorsque la vitre extérieure 2, feuilletée, est considérée en coupe, le chant 50 de la feuille de verre intérieure 5 est situé en retrait r, centripète, du chant 30 de la feuille de verre extérieure 3 sur une partie au moins de la longueur du chant 50 de la feuille de verre intérieure 5 et de préférence sur la totalité de la longueur du chant 50 de la feuille de verre intérieure 5.

Ainsi, lorsque la vitre extérieure 2 est observée de face, le retrait r est de préférence présent tout autour de la vitre extérieure 2 : le chant 50 de la feuille de verre intérieure 5 est plus vers le centre de la vitre extérieure 2 que le chant 60 de la vitre intérieure 6. Ce retrait r est de préférence constant le long d'un bord longitudinal ou latéral considéré ; il est de préférence identique le long de chacun des bords longitudinaux et latéraux de la vitre extérieure 2.

Le retrait r est de préférence compris entre 1,0 et 10,0 mm, et de préférence entre 2,0 et 8,0 mm ; il est ici de 5,0 mm.

Ce retrait r peut être caché de la vue de l'espace extérieur E par une couche d'émail située en pourtour de la face extérieure 21 de la vitre extérieure (ou en pourtour de la face extérieure 31 de la feuille de verre extérieure, respectivement lorsque la vitre extérieure est feuilletée.

L'ouverture du rail 75, et ainsi l'ouverture de la cavité d'accrochage 77, en direction centrifuge est dans le prolongement uniquement du chant 60 de la vitre intérieure 6.

En figures 3 et 4, le cordon de mastic 76 remplit de préférence tout l'espace en direction transversale entre la face intérieure 62 de la vitre intérieure 6 et la face 52 de la feuille de verre intérieure 5, en s'étendant en outre au contact du chant 50 de cette feuille de verre intérieure 5, du chant 40 de la feuille de matière plastique 4, et de la face 32 de la feuille de verre extérieure 3 mais sans s'étendre jusqu'au chant 30.

Sur ces figures 3 et 4, le cordon de mastic 76 remplit de préférence tout l'espace en hauteur entre d'une part l'espaceur 71 et d'autre part l'arête entre le chant 60 et la face 61.

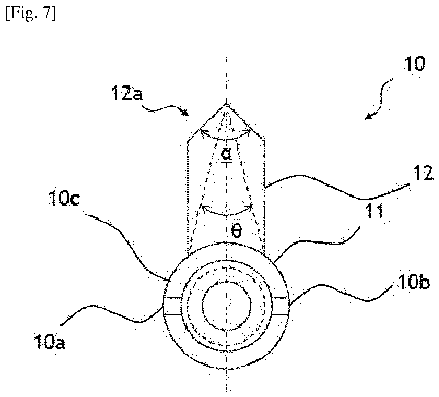

Les figures 5 et 7 illustrent un verrou 10 à rotation centrée : le corps 11 du verrou est un cylindre creux percé d'un tube cylindrique coaxial avec l'axe du cylindre du corps, pour le passage du moyen de fixation 104.

Ces figures montrent en particulier que l'aile 12 latérale du verrou peut présenter une extrémité 12a (à l'opposé du corps 11), en pointe, présentant un angle α, en vue de face, comme illustré sur la [Fig.7], par exemple à 90°, afin de faciliter son passage dans la cavité d'accrochage 77 et venir au contact, ou quasiment au contact, du fond 78.

L'aile 12 latérale comporte en outre une face interne en biseau, présentant un angle β, en vue de dessus, comme illustré sur la [Fig.6] et un angle θ, en vue de face, comme illustré sur la [Fig.7]. La forme de l'aile 12 latérale permet de faciliter le blocage de sa rotation dans les deux sens de rotation par contact contre la paroi de la cavité d'accrochage 77.

L'aile 12 latérale pénètre ici dans la cavité d'accrochage 77 sur toute la hauteur intérieure du rail 75, c'est-à-dire sur une hauteur d'environ 7 mm.

L'aile 12 latérale de chaque verrou est venue de matière avec le corps 11.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

En particulier, il est inclus dans la présente invention que la vitre intérieure 6 peut elle-même être feuilletée.

## Revendications

1. Système de fixation d'un vitrage (1) latéral d'un moyen de transport, en particulier un vitrage de train, à une baie (9) périphérique, ledit vitrage (1) étant un vitrage multiple, fixe, présentant une face extérieure (101) qui fait face à un espace extérieur (E) et une face intérieure (102) qui fait face à un espace intérieur (I), ladite face extérieure (101) du vitrage étant en continuité d'aspect avec un flanc extérieur (91) de ladite baie (9) sur tout sa périphérie, ledit vitrage (1) comprenant :
- une vitre extérieure (2) présentant une face extérieure (21) qui fait face à l'espace extérieur (E), un chant (20) périphérique et une face intermédiaire (22) à l'opposé de la face extérieure (21), ladite vitre extérieure (2) étant de préférence feuilletée et comprenant alors au moins une feuille de verre extérieure (3), une feuille de verre intérieure (5), ainsi qu'une feuille de matière plastique (4) située entre ladite feuille de verre extérieure (3) et ladite feuille de verre intérieure (5), chaque feuille (3, 4, 5) de ladite vitre extérieure (2) présentant un chant (30, 40, 50) périphérique,
- une vitre intérieure (6) ayant une face intérieure (62) qui fait face à l'espace intérieur (I), une face intermédiaire (61) à l'opposé de la face intérieure, ainsi qu'un chant périphérique (60),
- une structure interne (7) qui est située en périphérie interne de ladite vitre extérieure (2) et en périphérie interne de ladite vitre intérieure (6) en étant au moins en partie plus vers le centre du vitrage (1) que le chant périphérique (20, 60) respectivement de ladite vitre extérieure (2) et de ladite vitre intérieure (6), et qui tient ces deux vitres (2,6) ensemble de telle sorte que le vitrage (1) réalise une séparation entre ledit espace extérieur (E) et ledit espace intérieur (I) avec une cavité de vitrage (8) située entre lesdites vitres (2, 6), ladite structure interne (7) comportant une cavité d'accrochage (77) présentant un fond (78) centripète et une ouverture (79) centrifuge, ladite baie (9) comportant un verrou (10) qui est fixé à ladite baie et est situé plus centrifuge que le chant (60) de ladite vitre intérieure (6), ledit verrou (10) présentant une aile (12) latérale s'étendant à l'intérieur de ladite cavité d'accrochage (77) et en vis-à-vis d'un bord de ladite face intermédiaire (61) de la vitre intérieure (6) par rotation à 90° de ladite aile (12) latérale, un joint d'étanchéité extérieur (99), de préférence creux, étant situé dans un espace d'applique (95) entre d'une part ledit flanc extérieur (91) et
d'autre part le chant (20) de ladite vitre extérieure (2) ou d'autre part le chant (30) de ladite feuille de verre extérieure (3), ledit joint d'étanchéité extérieur (99) présentant une face intérieure (99d),
***caractérisé en ce que***
ledit verrou (10) comporte au moins une saillie, et comporte de préférence une première saillie (10a) et une seconde saillie (10b), s'étendant vers l'espace extérieur (E), ledit joint d'étanchéité extérieur (99) comprenant une rainure (99c) s'étendant de ladite face intérieure (99d) vers l'espace extérieur (E),
- ladite saillie, et de préférence lesdites saillie (10a, 10b), étant destinée à être logée dans ladite rainure (99c) lorsque ladite aile (12) latérale est disposée dans ladite cavité d'accrochage (77), le verrou (10) étant en position fermée, et
- ladite saillie, et de préférence lesdites saillies (10a, 10b), étant destinés à être en appui sur ladite face intérieure (99d) dudit joint d'étanchéité extérieur (99) lorsque le verrou (10) est dans une autre position que la position fermée.

2. Système de fixation d'un vitrage (1) selon la revendication 1 **caractérisé en ce que** le joint d'étanchéité extérieur (99) présente une épaisseur (e₉₉), ladite saillie, et de préférence lesdites saillies (10a, 10b), présente(nt) une longueur (L) inférieure à l'épaisseur (e₉₉) dudit joint d'étanchéité extérieur (99).

3. Système de fixation d'un vitrage (1) selon la revendication 2 **caractérisé en ce que** ladite saillie, et de préférence lesdites saillies (10), présente(nt) une longueur (L) égale à au moins 25% de l'épaisseur (e₉₉) dudit joint d'étanchéité extérieur (99), voire à au moins 50% de l'épaisseur (e₉₉) dudit joint d'étanchéité extérieur (99).

4. Système de fixation d'un vitrage (1) selon l'une quelconque des revendications 1 à 3 **caractérisé en ce que** ladite rainure (99c) est disposée au milieu dudit joint d'étanchéité extérieur (99) selon sa hauteur.

5. Système de fixation d'un vitrage (1) selon l'une quelconque des revendications 1 à 4 **caractérisé en ce que** une extrémité (10a', 10b') d'une ou de chaque saillie (10a, 10b) présente un arrondi.

6. Système de fixation d'un vitrage (1) selon l'une quelconque des revendications 1 à 5 **caractérisé en ce que** ladite aile (12) latérale présente une extrémité en pointe présentant dans une vue de face un angle (α) compris entre 60°et 120°, de préférence entre 80°et 100°, de manière encore plus préférentielle entre 85°et 95°.

7. Système de fixation d'un vitrage (1) selon l'une quelconque des revendications 1 à 6 **caractérisé en ce que** ladite rainure (99c) présentant une largeur (l₉₉), une ou chaque saillie (10a, 10b) présente une épaisseur (e₁₀) comprise entre 0,8 et 1,1 fois ladite largeur (l₉₉) de la rainure (99c).

## Patentansprüche

1. System zum Befestigen einer Seitenverglasung (1) eines Transportmittels, insbesondere einer Zugverglasung, an einer Umfangsöffnung (9), wobei die Verglasung (1) eine feste Mehrfachverglasung ist, die eine äußere Fläche (101), die einem äußeren Raum (E) gegenüberliegt, und eine innere Fläche (102), die einem inneren Raum (I) gegenüberliegt, vorweist, wobei die äußere Fläche (101) der Verglasung über ihren gesamten Umfang mit einer äußeren Flanke (91) der Öffnung (9) optisch zusammenhängend ist, die Verglasung (1) umfassend:
- eine äußere Scheibe (2), die eine äußere Fläche (21), die dem äußeren Raum (E) gegenüberliegt, eine Umfangskante (20) und eine Zwischenfläche (22) gegenüber der äußeren Fläche (21) vorweist, wobei die äußere Scheibe (2) vorzugsweise laminiert ist und dann mindestens eine äußere Glasplatte (3), eine innere Glasplatte (5) sowie eine Kunststoffplatte (4) umfasst, die zwischen der äußeren Glasplatte (3) und der inneren Glasplatte (5) gelegen ist, wobei jede Platte (3, 4, 5) der äußeren Scheibe (2) eine Umfangskante (30, 40, 50) vorweist,
- eine innere Scheibe (6), die eine innere Fläche (62), die dem inneren Raum (I) zugewandt ist, eine Zwischenfläche (61) gegenüber der inneren Fläche sowie eine Umfangskante (60) besitzt,
- eine Innenstruktur (7), die an dem Innenumfang der äußeren Scheibe (2) und an dem Innenumfang der inneren Scheibe (6) gelegen ist und sich mindestens teilweise weiter zu der Mitte der Verglasung (1) als die Umfangskante (20, 60) der äußeren Scheibe (2) beziehungsweise der inneren Scheibe (6) befindet, und die diese zwei Scheiben (2, 6) so zusammenhält, dass die Verglasung (1) eine Trennung zwischen dem äußeren Raum (E) und dem inneren Raum (I) mit einem Verglasungshohlraum (8), der zwischen den Scheiben (2, 6) gelegen ist, vornimmt, wobei die Innenstruktur (7) einen Aufhängungshohlraum (77) aufweist, der einen zentripetalen Boden (78) und einen zentrifugalen Eingang (79) vorweist, wobei die Öffnung (9) eine Verriegelung (10) aufweist, die an der Öffnung befestigt ist und zentrifugaler als die Kante (60) der inneren Scheibe (6) gelegen ist, wobei die Verriegelung (10) einen Seitenflügel (12) vorweist, der sich in den Aufhängungshohlraum (77) erstreckt und gegenüber einem Rand der Zwischenfläche (61) der inneren Scheibe (6) durch 90°-Drehung des Seitenflügels (12) liegt, wobei eine äußere Dichtung (99), die vorzugsweise hohl ist, in einem Anwendungsraum (95) zwischen der äußeren Flanke (91) einerseits und andererseits der Kante (20) der äußeren Scheibe (2) oder andererseits der Kante (30) der äußeren Glasplatte (3) gelegen ist, wobei die äußere Dichtung (99) eine innere Fläche (99d) vorweist,
**dadurch gekennzeichnet, dass**
die Verriegelung (10) mindestens einen Vorsprung aufweist, und vorzugsweise einen ersten Vorsprung (10a) und einen zweiten Vorsprung (10b) aufweist, die sich in Richtung des äußeren Raums (E) erstrecken, wobei die äußere Dichtung (99) eine Nut (99c) umfasst, die sich von der inneren Fläche (99d) in Richtung des äußeren Raums (E) erstreckt,
- wobei der Vorsprung und vorzugsweise die Vorsprünge (10a, 10b) dafür bestimmt sind, in der Nut (99c) untergebracht zu werden, wenn der Seitenflügel (12) in dem Aufhängungshohlraum (77) angeordnet ist, wobei die Verriegelung (10) sich in der geschlossenen Position befindet, und
- wobei der Vorsprung und vorzugsweise die Vorsprünge (10a, 10b) dafür bestimmt sind, auf der inneren Fläche (99d) der äußeren Dichtung (99) aufzuliegen, wenn die Verriegelung (10) sich in einer anderen Position als der geschlossenen Position befindet.

2. System zum Befestigen einer Verglasung (1) nach Anspruch 1,
**dadurch gekennzeichnet, dass** die äußere Dichtung (99) eine Dicke (e₉₉) vorweist, wobei der Vorsprung und vorzugsweise die Vorsprünge (10a, 10b) eine Länge (L) hat/haben, die kleiner als die Dicke (e₉₉) der äußeren Dichtung (99) ist.

3. System zum Befestigen einer Verglasung (1) nach Anspruch 2,
**dadurch gekennzeichnet, dass** der Vorsprung und vorzugsweise die Vorsprünge (10) eine Länge (L) vorweist/vorweisen, die mindestens gleich 25 % der Dicke (e₉₉) der äußeren Dichtung (99) oder sogar mindestens 50 % der Dicke (e₉₉) der äußeren Dichtung (99) ist.

4. System zum Befestigen einer Verglasung (1) nach einem der Ansprüche 1 bis 3, **dadurch gekennzeichnet, dass** die Nut (99c) mitten in der äußeren Dichtung (99) entlang ihrer Höhe angeordnet ist.

5. System zum Befestigen einer Verglasung (1) nach einem der Ansprüche 1 bis 4, **dadurch gekennzeichnet, dass** ein Ende (10a', 10b') eines oder jedes Vorsprungs (10a, 10b) eine Rundung vorweist.

6. System zum Befestigen einer Verglasung (1) nach einem der Ansprüche 1 bis 5 **dadurch gekennzeichnet, dass** der Seitenflügel (12) ein spitzes Ende vorweist, das in einer Vorderansicht einen Winkel (α) zwischen 60° und 120°, vorzugsweise zwischen 80° und 100°, mehr bevorzugt zwischen 85° und 95°, vorweist.

7. System zum Befestigen einer Verglasung (1) nach einem der Ansprüche 1 bis 6 **dadurch gekennzeichnet, dass** die Nut (99c) eine Breite (l₉₉) vorweist, ein oder jeder Vorsprung (10a, 10b) eine Dicke (e₁₀) zwischen dem 0,8- und 1,1-fachen der Breite (l₉₉) der Nut (99c) vorweist.

## Claims

1. A system for mounting a side glazed unit (1) of a means of transport, in particular a train glazed unit, in a peripheral opening (9), said glazed unit (1) being a multiple, fixed, glazed unit having an outer face (101) that faces an external space (E) and an inner face (102) that faces an internal space (I), said outer face (101) of the glazed unit being continuous in appearance with an outer flank (91) of said opening (9) over its entire periphery, said glazed unit (1) including:
- an outer glass pane (2) having an outer face (21) which faces the outer space (E), a peripheral edge (20) and an intermediate face (22) opposite the outer face (21), said outer glass pane (2) preferably being laminated and then comprising at least one outer glass sheet (3), an inner glass sheet (5), as well as a plastic sheet (4) located between said outer glass sheet (3) and said inner glass sheet (5), each sheet (3, 4, 5) of said outer glass pane (2) having a peripheral edge (30, 40, 50),
- an inner glass pane (6) having an inner face (62) that faces the inner space (I), an intermediate face (61) opposite the inner face, as well as a peripheral edge (60),
- an internal structure (7) which is located at the internal periphery of said outer glass pane (2) and at the internal periphery of said inner glass pane (6) while being at least in part further towards the center of the glazed unit (1) than the peripheral edge (20, 60) respectively of said outer glass pane (2) and of said inner glass pane (6), and which holds together these two glass panes (2, 6) in such a way that the glazed unit (1) provides a separation between said external space (E) and said internal space (I) with a glazed unit cavity (8) located between said glass panes (2, 6), said internal structure (7) including a connecting cavity (77) having a centripetal bottom (78) and a centrifugal opening (79), said opening (9) including a lock (10) which is mounted in said opening and is located more centrifugally than the edge (60) of said inner glass pane (6), said lock (10) having a lateral wing (12) extending into said connecting cavity (77) and opposite an edge of said intermediate face (61) of the inner glass pane (6) by 90° rotation of said lateral wing (12), an outer seal (99), preferably hollow, being located in a mounting space (95) between on the one hand said outer flank (91) and on the other hand the edge (20) of said outer glass pane (2) or on the other hand the edge (30) of said outer glass sheet (3), said outer seal (99) having an inner face (99d),
***characterized in that,***
said lock (10) includes at least one protrusion, and preferably includes a first protrusion (10a) and a second protrusion (10b), extending towards the external space (E), said outer seal (99) comprising a groove (99c) extending from said inner face (99d) toward the external space (E),
- said protrusion, and preferably said protrusions (10a, 10b), being intended to be housed in said groove (99c) when said lateral wing (12) is arranged in said connecting cavity (77), the lock (10) being in the closed position, and
- said protrusion, and preferably said protrusions (10a, 10b), being intended to bear on said inner face (99d) of said outer seal (99) when the lock (10) is in another position than the closed position.

2. The system for mounting a glazed unit (1) according to claim 1 **characterized in that** the outer seal (99) has a thickness (e₉₉), said protrusion, and preferably said protrusions (10a, 10b), has (have) a length (L) less than the thickness (e₉₉) of said outer seal (99).

3. The system for mounting a glazed unit (1) according to claim 2, **characterized in that** said protrusion, and preferably said protrusions (10), has (have) a length (L) equal to at least 25% of the thickness (e₉₉) of said outer seal (99), or even at least 50% of the thickness (e₉₉) of said outer seal (99).

4. The system for mounting a glazed unit (1) according to any one of claims 1 to 3, **characterized in that** said groove (99c) is arranged in the middle of said outer seal (99) according to its height.

5. The system for mounting a glazed unit (1) according to any one of claims 1 to 4, **characterized in that** one end (10a', 10b') of one or each protrusion (10a, 10b) is rounded.

6. The system for mounting a glazed unit (1) according to any one of claims 1 to 5, **characterized in that** said lateral wing (12) has a pointed end having in a front view an angle (α) of between 60° and 120°, preferably between 80°and 100°, even more preferably between 85°and 95°.

7. The system for mounting a glazed unit (1) according to any one of claims 1 to 6, **characterized in that** said groove (99c) having a width (l₉₉), one or each protrusion (10a, 10b) has a thickness (e₁₀) between 0.8 and 1.1 times said width (l₉₉) of the groove (99c).
